# EUROPEAN PATENT SPECIFICATION

(11) **EP 0 663 131 B1**
(45) Date of publication and mention of the grant of the patent: **24.06.1998**
(21) Application number: 93920963.1
(22) Date of filing: 17.09.1993
(51) Int. Cl.: H04M 11/04, G07C 1/10

(54) **REMOTE ACTIVITY MONITORING SYSTEM AND METHOD**
SYSTEM UND VERFAHREN ZUR FERNÜBERWACHUNG DER AKTIVITÄT
PROCEDE ET SYSTEME DE CONTROLE A DISTANCE D'ACTIVITES

(30) Priority: 19.09.1992 GB 9219954; 19.05.1993 GB 9310282
(43) Date of publication of application: 19.07.1995
(73) Proprietor: TUNSTALL GROUP PLC, Yorkshire DN14 0HR (GB)
(72) Inventor: WAPPETT, Michael, Stanley 6 Grasmere Avenue, Wetherby West Yorkshire LS22 4YT (GB); HARRIS, Geoff, Jonathan Longfold Church Street, York YO5 8DD (GB); STOREY, Nigel, Alwyne 15 Tower Avenue, West Yorkshire WF9 1ED (GB); BINGHAM, David, Antony 14 Windsor Walk, Doncaster DN5 8NQ (GB)
(74) Representative: Hall, Robert Leonard
(86) International application number: GB9301966
(87) International publication number: WO9407323

(56) References cited:
- EP-A- 0 451 288
- WO-A-85/01582
- WO-A-87/07106
- WO-A-92/14225

## Description

The present invention relates to a system and method for monitoring activity remotely, especially for monitoring services provided at a residential or business property.

It can be desirable to monitor activity remotely at properties. For example, a residential property occupied by an elderly, handicapped or otherwise incapacitated person, may need to be monitored remotely to determine whether the occupant requires assistance. Residential and business properties may alternatively or in addition be monitored remotely to determine whether, for example, an intruder has entered the premises or whether there is a fire.

GB A 2166321 discloses a telephone unit for use in an emergency system, which includes a memory for storing an emergency telephone number, an automatic dialling device, and a hand-held transmitter by which the dialling device can be activated to dial the stored number. The unit allows an incapacitated person carrying the transmitter to contact another person using a public switched telephone network (PSTN) to obtain help, for example in the case of an injury. Units of this kind find particular application in sheltered housing complexes which are often occupied by elderly people, where a central monitoring system can be used to coordinate the provision of assistance to persons occupying a number of separate properties.

US A 4647914 discloses a security apparatus which can carry out automatic telephone dialling to a central security monitoring device having computerised stored information about the caller. However, there is no disclosure of monitoring of a provided service.

US A 4284849 discloses a monitoring and signal system comprising a remote control unit communicating with a communications centre by means of a telephone network, such that an alarm signal can be transmitted to the communications centre by means of the telephone network. However, this prior art device also does not relate to the monitoring of a provided service.

US A 4137429 discloses a digital dialling system wherein an alarm indication can be transmitted to a remote station via a telephone line. However, this prior art arrangement again does not relate to the monitoring of a provided service.

WO 92/14225 discloses an alarm system comprising a telephone device which includes a memory and means for dialling a number stored in the memory; an input device by which identification codes can be entered into the telephone device; and message reception apparatus to which a link to the telephone device can be established using a number stored in the memory, the message reception apparatus comprising means to receive data transmitted and a memory. However, such device is merely an alarm mechanism.

WO 85/01582 discloses a "server/served" inter-action monitoring system whereby the "servers" have units transmitting a radio signal unique to them and the "served" have transceivers which receive transmitted signals when the "servers" are in close proximity and record such signals when the signal has been received for a sufficiently long period of time. The transceivers periodically transmit signals to a central processing unit which records time spent by various "servers" with various "served people". There is no remote monitoring nor any indication of the nature of the service provided. Moreover, there is no provision for multiple service provision to the same "served person".

The present invention seeks to provide a system by which activities can be monitored, for example to determine and to record that an activity has taken place, or to determine and record the timing and frequency of activities, and the period over which they take place. The invention also seeks to provide a device which enables a service provider to record details relating to a service when that service is provided in order to monitor the provision of that service, for example for accounting purposes or for coordinating the provision of that service with the provision of other services to the same recipient.

According to one aspect of the present invention there is provided a remote activity monitoring system, which comprises:
a) a telephone device which includes a memory and means for dialling a number stored in the memory;
b) an input device by which identification codes can be entered into the telephone device;
c) message reception apparatus to which a link from the telephone device can be established using a number stored in the memory of the telephone device, the message reception apparatus comprising means to receive data transmitted from the telephone device and a memory, characterised in that,
d) said identification codes comprise
   i) service provider and/or service provided identity; and
   ii) location identity; and
   iii) an event code;
e) said telephone device has means responsive to input of said identification codes to establish said link and to transmit said codes; and
f) said message reception apparatus is adapted to store data corresponding to said codes in its memory.

Activities which the system of the invention may be used to monitor in the context of a residential property may include the provision of services by a visiting provider. For example, for an elderly person in a sheltered housing complex, services may be provided by a supplier of meals, a doctor or a nurse, a hairdresser, a warden and so on. Each provider can be supplied with a code, by which he or she or the service being provided can be identified. The provider code may comprise two parts - one part to identify the provider organisation, the other to identify the individual who is providing the service. The system of the invention can then be used to provide a record of the provision of the service, using a telephone device by which data relating to the provision of the service can be transmitted to centralised message reception apparatus. That apparatus can then be used to record information relating to the service, for example to record simply that the service has taken place, which might be useful for accounting purposes if it is necessary to levy a charge for the service. Alternatively or in addition, the apparatus may record the time at which the service was provided, which might be useful for medical purposes, for example in the situation where it is necessary to keep records of the frequency with which a doctor calls on an individual. The system of the invention allows this monitoring function to be achieved in conjunction with apparatus used to transmit an alarm signal using common telephone communications equipment, and is therefore particularly appropriate for use by persons who require their properties to be monitored for assistance, such as those in sheltered housing complexes.

The message reception apparatus may be simply a telephone by which a spoken message (generally recorded) can be received by an operator from the telephone device associated with the input device. Alternatively or in addition, the apparatus may include a data handling machine which may be used for example for interpreting, transmitting, recording, or modifying the data. The message reception apparatus can be located at a central monitoring station, used to monitor a number of properties. When the system of the invention is used in a sheltered housing complex, the message reception apparatus may be located in a warden's office.

The memory in the telephone device will generally store a telephone number which allows a connection to be made to the location of the message reception apparatus. Generally, the memory will store more than one such number, to provide for a failed connection or a busy line.

The input device may include a keypad, by which code can be inputted into the system, for example, a four digit numeric code. That code may identify a person providing a service, the company which is providing the service, or the nature of the service. The keypad may be a part of conventional telephone apparatus which includes software to enable the keypad to be operated in this way. The keypad may be provided as an auxiliary keypad, in addition to any other keypad associated with the telephone device in the conventional manner.

Preferably the input device of the system referred to above has a dormant condition which it adopts during periods of inactivity, and an active condition in which it can receive a signal transmitted from a remote device. This embodiment of the system allows data to be created about an activity carried out without direct access to the input device of the system. For example, it allows activities carried out outside a property in which the input device is located to be monitored for example for recordal. Activities which might be monitored in this way include, for example, the provision of services such as gardening, window cleaning, building, delivery, and other services. The provider of the service will be provided with a remote transmitter for transmitting a signal to the input device, the signal being appropriately coded to identify the person providing the service, the company which is providing the service, or the nature of the service, as desired. The signal can provide the required identification by use of, for example, appropriate codes of a single frequency, or different frequencies.

The use of an input device which remains dormant until triggered makes it possible for data to be transmitted to a selected input device, while other input devices in its vicinity remain dormant and do not therefore receive the data. Preferably, the system referred to above includes an activating trigger, by which the input device can be switched from its dormant condition to its active condition. The trigger can be connected to the input device by means of electrical conductors, and might take the form of, for example, a switch. The trigger can include means for transmitting an activating signal to the input device wirelessly, for example as an RF signal. In this embodiment the signal will generally be a unique signal for the input device associated with it and will be capable of being distinguished from RF signals associated with input devices in other properties, and from RF signals which might be used to transmit identification data to the input device once activated. The distinction will generally be achieved by use of appropriate codes at a single frequency, or different frequencies. The system of the invention may include at least one remote transmitter device for transmitting a signal to the input device which will generally be received by the input device when in an active condition in which it is capable of receiving the signal.

When the system includes an input device by which an input code can be inputted manually, and an input device which operates in conjunction with a transmitter device by which a code can be inputted remotely, the two input devices will preferably be incorporated into a common housing. However, they might be incorporated into separate housings, which gives rise to the advantages of flexibility provided by a modular system.

The system of the invention can include an alarm trigger by which transmission of an alarm signal can be triggered, the data receiving means and the message reception apparatus including means for receiving data transmitted from the telephone device in response to an alarm signal.

The system can include means for calculating a time period between a first input and a second input and for generating data corresponding to that time period for transmission to the message reception apparatus.

In another embodiment of the invention, there is provided a portable device to be carried by a service provider, the device comprising memory means for at least temporarily storing data relating to a service provided at said location and user interface means for inputting said data to said memory means, wherein the user interface means is actuated in use in response to activation of the trigger device.

It can thus be seen that this aspect of the present invention has the advantage that a portable unit carried by a service provider, such as a provider of a service in a sheltered housing complex, can be used to record, at the location of provision of a service, data relating to the service provided, until that data can be retrieved at a suitable time after service providing visits to several such locations.

The device preferably further comprises timer means for enabling said memory means to store the data including data relating to a time interval over which the service is provided.

This optional feature gives the advantage that as well as logging data relating to the nature of the service, the time over which the service is provided can be recorded for use in such cases as when a charge is being levied which depends on the duration of the provision of the service. The device is also suitable for use when it is desired to record data corresponding to the time at which a service was provided, for example, a meal delivery.

The trigger device may be a radio transmitter means.

Alteratively, or in addition, the trigger device may comprise a magnetic card and user interface means may comprise magnetic card reading means.

In a preferred embodiment of the invention the portable device has a dormant condition which it adopts during periods of inactivity, and an active condition in which it can be actuated in response to the access means.

This clearly provides the advantage that the portable device can be designed such that it uses less power, whether electrical mains, battery or both, during periods of inactivity, so that the cost of running the portable device is kept to a minimum, as is the cost and inconvenience of replacing any replenishable power supply such as a battery.

The portable device may further comprise warning means for providing a warning of imminent malfunction of the device.

Thus a warning is given of imminent malfunction such as low battery power or low remaining available memory capacity in good time to enable the fault to be corrected before serious malfunction of the portable device occurs.

The device may also comprise data transmission means for enabling a telecommunications link to be established between the portable device and said message reception apparatus in order that said data can be transmitted to said apparatus via said link.

The advantage of this feature is that data stored in the device can be transmitted from any location with a telecommunications connection via the telecommunications link to the message reception apparatus which may be a control centre in a sheltered housing complex. This avoids the inconvenience of the service provider having to go to a specified location to transfer data from the device when the memory becomes full.

The data transmission means may comprise a modem, which then enables the device to transmit data via the conventional telephone system.

In a preferred embodiment of the invention, the data transmission means is adapted to enable the device to receive data and/or instructions via said link.

This clearly provides the advantage that as well as being capable of downloading data to a specified location such as a control centre, the device may be programmed from the control centre via the telecommunications link.

According to a further aspect of the invention, there is provided a remote activity monitoring method comprising
a) the use of a system as defined above wherein the telephone device and input device are situated at a location where said service is to be provided and said message reception apparatus is remote therefrom;
b) the steps of inputting said identification codes on provision of said service by a service provider whereby said telephone device establishes a link with said message reception apparatus and transmits said identification codes identifying to the message reception apparatus:
   i) the location; and
   ii) the service provider and/or service provided; and
   iii) an event time.

Embodiments of the present invention will now be described by way of example, with reference to the accompanying drawings, in which:-
Figure 1 shows a block diagram showing components of a system embodying an aspect of the invention; and
Figure 2 shows a block diagram showing components of a system embodying another aspect of the invention.

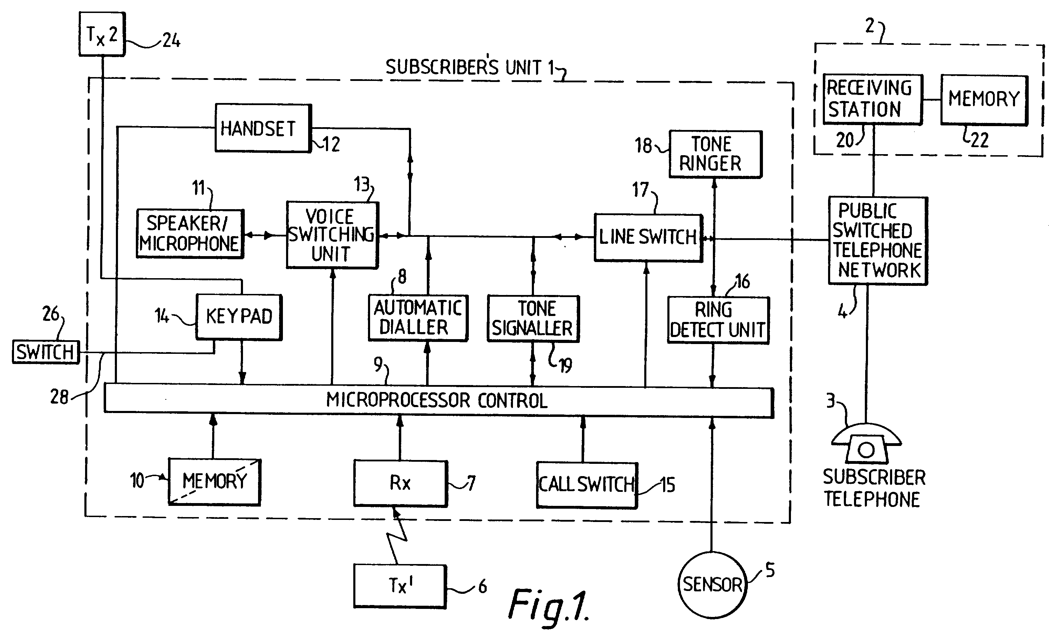

Figure 1 shows a remote activity monitoring system, which comprises telecommunications apparatus 1 of the type disclosed in GB A 2166321. The apparatus 1 is connected to a public switched telephone network (PSTN) 4 by way of which calls can be made to an emergency call receiving station 2, or to a subscriber's telephone 3. The telecommunications apparatus 1 incorporates a microprocessor and application specific integrated circuit 9 by which it is controlled. It further includes a radio signal receiver 7, an automatic dialler 8, a non-volatile memory 10, such as an EEPROM, a loud speaker and microphone unit 11, a handset 12, a voice switching unit 13, a keypad 14, a call switch 15, a ring detector unit 16 having a first normal switching condition, a line switch 17, a tone ringer 18 and a tone signaller 19.

The apparatus 1 also has associated with it one or more sensors 5. These might include, for example, a manually operated switch or switches mounted on the unit or remote therefrom, together with environmental detectors such as a smoke detector or a fire detector. Also associated with the apparatus is a control signal generator comprising a radio signal transmitter 6, in a form which may be conveniently be carried by a subscriber. A suitable generator might be worn on a cord around the neck of the subscriber, carried in the hand or a pocket, fastened to clothing or worn on the body using a "wristwatch" type strap.

The memory 10 stores information concerned with the emergency call function of the unit and containing the emergency telephone number or numbers and unique identification code of the unit. The memory is also capable of storing telephone numbers for normal non-emergency use.

In operation of the apparatus, an emergency call is initiated by operation of any one of the sensors 5, or by operation of the radio signal transmitter 6. In order to reassure the subscriber that an emergency call has been made, a call progress light on the apparatus will flash, and a reassurance tone will sound from the speaker. During this period, the alarm may be reset using a cancel switch on the apparatus, in order to abort the call, and to return the apparatus to standby mode. If, after a predetermined period, no cancel signal has been generated, an alarm signal is applied to the microprocessor 9, which causes a call to be placed to a control centre, whose telephone number is retrieved from the memory 10. The call is placed by means of the automatic dialler 8 to a receiving station 2.

When a call is received at the receiving station 2, the PSTN line is looped, and a hand-shaking routine is exchanged between the receiving station 2 and the apparatus of the invention. A hand-shake signal is received and decoded at the apparatus by the tone signaller 19. Once the hand-shaking routine has been completed, the microprocessor 9 transmits via the tone signaller 19, information coded appropriately for transmission over the PSTN, the information indicating at least the identity of the unit from which the call has originated, and the nature of the call (for example, as to whether the call is generated manually or in response to an alarm signal). Speech communication is then possible between the receiving station 2 and the subscriber, the subscriber using for example the loud speaker and microphone unit 11.

The memory 10 may contain further emergency telephone numbers that can be used by the microprocessor 9 to initiate automatically dialled calls in the event that a first emergency call fails.

Detailed information concerning the structure and operation of the alarm trigger aspect of the telephone device, including information concerning the interactions which are the component features of the device, is disclosed in GB A 2166321.

The numbers stored in the memory 10 of the device will be that of the message reception centre 2, at which message reception apparatus is located. The memory 10 can store information regarding the alarm call function of the telephone device, including an identification code unique to the device. The apparatus includes means 20 for receiving data transmitted from the telephone device in response to input of an identification code or to an alarm signal, and a memory 22 for data corresponding to a plurality of identification codes which may be transmitted to it from the telephone device.

The telephone device has associated with it an input device which comprises the keypad 14, which in normal operation of the telephone device can be used to input the number of another subscriber.

The input device includes at least one remote RF transmitter 24 for transmitting an identification signal to the input device to identify a service provider. The input device has a dormant condition which it adopts during periods of inactivity and an active condition in which it can receive a signal transmitted from the transmitter 24. The device includes an activating trigger 26 in the form of an electric switch connected to the device by means of a pair of copper conductors 28 to switch the input device from its dormant condition to its active condition.

Transmission of data to the message reception apparatus 2 (other than an alarm signal) can be initiated by entering an identification code using the keypad 14 of the input device. The code might identify, for example, a person providing a service, the company which is providing the service, or the nature of the service.

On input of a code, the input device causes the automatic dialling device 8 to connect the telephone apparatus 1 to the message reception apparatus 2 using a telephone number stored in the memory 10. Alternatively, an identification code can be entered into the input device when direct access to the device is not available, using the activating trigger 26 and the remote transmitter device 24. In this situation, the trigger 26 is used to switch the input device from its dormant condition to its active condition, in which it can receive a signal from the transmitter 24. Such a signal would include a code, for example to identify a person or company providing a service, or the nature of a service. On receipt of a signal from the transmitter 24, the input device causes the automatic dialling device 8 to connect the telephone apparatus 1 to the message receiving apparatus 2, in the manner described above.

There are two main methods of logging service provider information. These are: entering a series of identification codes into the telephone apparatus by means of the keypad; or, by use of an appropriately coded radio trigger.

Using the keypad method, a service provider may activate the telephone apparatus (by pressing a special key on the keypad), enter an appropriate code number (such as a personal identification number followed by a service code number), then log the commencement or end of the service (by pressing another key on the keypad).

Using the radio trigger method, a service provider may activate the telephone apparatus (by pressing a special button located outside the premises), then activate a suitably coded radio trigger. This method logs the time the service was provided, as well as details of the service provider. It also allows the service call to be logged quickly without requiring entry to the premises. The use of a suitable button also ensures that the radio trigger activates only the telephone apparatus within the premises, and not other telephone apparatus which is in range.

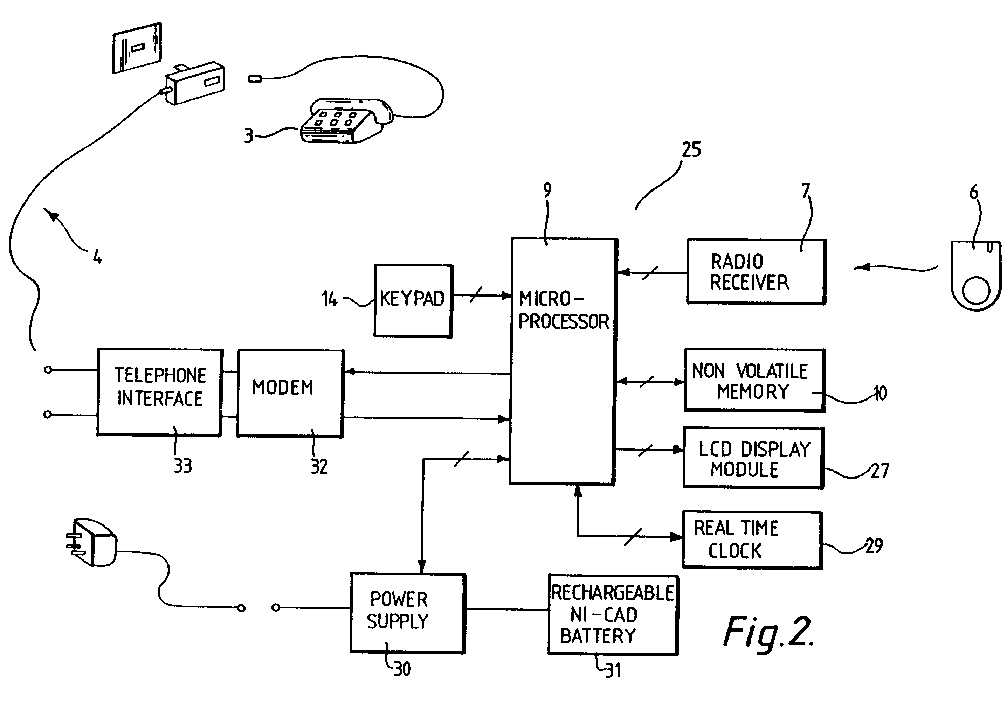

When it is desired to record a period of time over which an activity takes place, the system of the invention can be used to measure that period. A person involved in the activity, for example a provider of a service (such as a hairdresser visiting a resident in a sheltered housing complex), can input a code into the input device when the activity starts. A code can then be inputted into the device when the activity is completed. The device (or other component of the system) calculates the period between the times that the activity was started and completed, and information related to the period can be transmitted to the message receiving apparatus 2, for example to be recorded. The operation of an apparatus recording a period of time over which an activity takes place will be described in further detail below with reference to Figure 2.

Operation of the device will generally be controlled by means of a microprocessor 9, for example using components of the call unit disclosed in GB A 2266321.

Referring to Figure 2, there is shown a portable service provision monitoring device 25 embodying another aspect of the invention, in which parts common to the embodiment of Figure 1 are denoted by like reference numerals. The device 25 is suitable for use when it is desired to record data corresponding to the period of time during which a service is provided, for example, for accounting purposes. The device is also suitable for use when it is desired to record data corresponding to the time at which a service was provided, for example, a meal delivery. The device 25 is designed to be carried by the service provider so that details regarding the nature and duration of a service to be provided can be recorded at the location at which the service is provided. Accordingly, the device 25 is designed to be hand-held, and typically has dimensions of the order of 185x85x35mm, and a weight of generally less than 500g. The device 25 incorporates a microprocessor by which it is controlled, a radio receiver 7, a keypad 14, a non-volatile memory 10 such as an EEPROM, an LCD display module 27, a real time clock 29, a power supply 30, and a rechargeable power supply 31 such as a nickel cadmium battery. The device 25 also incorporates an integral modem 32 and interface means 33 for connecting the modem to the PSTN. The nickel cadmium battery 31 and power supply 30 are so arranged that the battery 31 can be recharged from the mains power supply at any appropriate location (such as the service provider's home or base). The power supply 30 includes a transformer (such as a plug-top transformer), which enables the device to be powered by mains electricity at any appropriate location.

In the embodiment of Figure 2, the device 25 is powered by the battery 31 when the device is used for entering and recording data relating to the nature and duration of the service provided and the identity of the recipient of the service. The modem 32 is provided for transmitting data stored in the device to a receiving station 2 (not shown in Figure 2) of the type shown in Figure 1 after a suitable number of service provider visits. It is designed so that it is powered in use from the mains by means of the power supply 30. The power supply 30 also includes circuiting for monitoring the terminal voltage of the battery 31 and causing the microprocessor 9 to display a warning signal on the LCD display module 27 when the remaining battery capacity is low.

The radio receiver 7 of the embodiment of Figure 2 is activated by means of a remote RF transmitter 6, which, as described above, is supplied in a form which may conveniently be carried by a subscriber, such as worn on a cord around the neck of the subscriber, carried in the hand or a pocket, fastened to clothing or worn on the body using a "wristwatch" type strap.

In operation of the device 25, the service provider enters information relating to the nature of the service provided into the microprocessor 9 by means of the keypad 14. They then activate the device 25 from its dormant condition into its active condition (for example, by pressing a START button).

If a service is provided, for which it is desired to record the duration (i.e. a timed service), then the information entered into the microprocessor 9 will include an indication of the time of commencement of the service, by means of the real time clock 29. The time of commencement of the service is logged in response to the subscriber activating their radio transmitter 6 (or swiping their magnetic stripe card through a card reader). The radio transmitter 6 sends a unique identification signal to the radio receiver 7, which then enables data relating to the subscriber, such as the name and address of the subscriber to be entered into the microprocessor 9 along with the time and data entered by means of the keypad. To record the time of completion of the service, the service provider enters information relating to the nature of the service provided into the microprocessor by means of the keypad 14. They then activate the device from its dormant condition to its active condition (for example, by pressing an END button). They then activate the radio transmitter 6 (or swipe the magnetic card) as before.

An untimed service is defined as one in which it is desired to record the time at which the service was provided, but not the duration. If it is desired to record the time an untimed service was provided, the service provider enters information relating to the nature of the service provided using the keypad 14. They then activate the device from its dormant to its active condition (for example by pressing an END button). They then activate the radio transmitter 6 twice (or swipe the magnetic card twice).

If the service provider provides the same service to a series of subscribers, they will not need to enter the information relating to the nature of the service at each visit. The device will recall the previous service type setting in memory, so that at each visit the service provider needs only to check that the service set on the device is the same as the service being provided, before, for example pressing the START or END button.

With this embodiment, the memory 10 is designed such that it is capable of storing the data relating to of the order of 300 to 400 non-timed services, as well as other information relating to the functionality of the device 25. When the remaining memory capacity available is becoming low, a warning message indicates this on the LCD display module 27, which alerts the service provider to the low remaining memory capacity and the need to download the data stored in the memory 10.

When it is desired to download the data stored in the memory 10, the service provider can download the data by means of the modem 32 and telephone interface 33 via the PSTN to the message reception apparatus. The device 25 can also store data received from the message reception apparatus 2. By this method, it is possible to ensure that the real time clock 29 of the device maintains the same time as the message reception apparatus 2. It is also possible to amend any service provider codes or descriptions stored within the device 25.

It will be appreciated that the embodiment described above are given by way of example only and are in no way intended to limit the scope of the invention claimed, and it will be apparent to persons skilled in the art that various modifications and alternatives may be used in the apparatus. For example, in the embodiment of Figure 2, instead of or in addition to the radio receiver 7 and integral modem 32, respectively, a magnetic card reading means or a separate modem may be provided.

## Claims

1. A service provider monitoring system comprising:-
a) a telephone device (1) which includes a memory (10) and means (8) for dialling a number stored in the memory;
b) an input device (14) by which identification codes can be entered into the telephone device;
c) message reception apparatus (2) to which a link (4) from the telephone device can be established using a number stored in the memory of the telephone device, the message reception apparatus comprising means (20) to receive data transmitted from the telephone device and a memory (22),
wherein
d) said identification codes comprise
i) service provider and/or service provided identity; and
ii) location identity; and
iii) an event code;
e) said telephone device has means responsive to input of said identification codes to establish said link and to transmit said codes; and
f) said message reception apparatus is adapted to store data corresponding to said codes in its memory.

2. A service provider monitoring system as claimed in claim 1 characterised in that:-
g) the input device has a dormant condition which it adopts during periods of inactivity, and an active condition; and in that
h) the system further comprises a trigger device (24) to switch the input device between said dormant and active conditions.

3. A service provider monitoring system as claimed in claim 2, characterised in that
i) said trigger device is remote from the telephone device; and in that
j) the system includes a remote transmitter device (6) for transmitting a signal to the input device to provide the telephone device with said service provider and/or service provided identity and to initiate transmission of said identification codes to said message reception apparatus.

4. A service provider monitoring system as claimed in claim 2 or 3, characterised in that the trigger device is connected to the input device by means of electrical conductors.

5. A service provider monitoring system as claimed in claim 2, characterised in that
k) said trigger device is remote from the telephone device and causes emmission of a signal unique to said location; and in that
l) the system includes a portable device (25) comprising:-
memory means (10) for at least temporarily storing said identification codes; and
means (7) to enable the data to be stored in the memory means, wherein said means for enabling the data to be stored is actuated in use in response to activation of said trigger device.

6. A service provider monitoring system as claimed in claim 5, characterised in that said portable device includes data transmission means (32, 33) for enabling a link to be established between the device and said message reception apparatus in order that said data can be transmitted to said apparatus via said link.

7. A service provider monitoring system as claimed in any of claims 3 or 6, characterised in that
m) the system includes an alarm trigger (5) by which transmission of an alarm signal can be triggered, the data receiving means in the message reception apparatus including means for receiving data transmitted from the telephone device in response to an alarm signal.

8. A service provider monitoring system as claimed in any of claims 3 to 7, characterised in that the system includes means for calculating a time period between a first code input and a second code input.

9. A service provider monitoring system as claimed in claim 8, characterised in that said event code is the time difference between entry of said first and second code inputs.

10. A method of remote monitoring of the provision of a service by a service provider, the method characterised by comprising:-
a) the use of a system as claimed in claim 1 wherein the telephone device and input device are situated at a location where said service is to be provided and said message reception apparatus is remote therefrom;
b) the steps of inputting said identification codes on provision of said service by a service provider whereby said telephone device establishes a link with said message reception apparatus and transmits said identification codes identifying to the message reception apparatus:
i) the location; and
ii) the service provider and/or service provided; and
iii) an event time.

11. A method as claimed in claim 10, characterised in that the service provider inputs said identification codes at the start and end of the provided service.

12. A method as claimed in claim 11, characterised in that said telephone device transmits said identification codes to the message reception apparatus on input of both said first and second inputs and said event time is in each case the current time, provided by timer means in the telephone device, said message reception apparatus calculating an elapsed time period between said first and second inputs.

13. A method as claimed in claim 10, characterised in that time elapsed between said first and second inputs is measured by timer means in the telephone device and said event time on transmission of said identification codes by the telephone device is said elapsed time.

14. A method as claimed in any of claims 10 to 13, characterised in that it further comprises the steps of the service provider switching said telephone device from a dormant to an active condition by operation of a trigger device located outside but adjacent to said location and inputting said identification codes by transmission of a signal from a transmission device to the telephone device carried by said service provider.

## Patentansprüche

1. Überwachungssystem für Dienstleister mit:
a) einer Telefonvorrichtung (1), die einen Speicher (10) und eine Einrichtung (8) zum Wählen einer in dem Speicher gespeicherten Nummer aufweist;
b) einer Eingabeeinrichtung (14), durch die Identifizierungscodes in die Telefonvorrichtung eingegeben werden können;
c) einem Nachrichtenempfangsapparat (2), zu dem eine Verbindung (4) von der Telefonvorrichtung unter Verwendung einer in dem Speicher der Telefonvorrichtung gespeicherten Nummer hergestellt werden kann, wobei der Nachrichtenempfangsapparat eine Einrichtung (20) zum Empfangen von aus der Telefonvorrichtung übertragenen Daten und einen Speicher (22) aufweist,
d) wobei die Identifizierungscodes
i) die Identität des Dienstleisters und/oder der erbrachten Dienstleistung, und
ii) eine Ortsidentifizierung; und
iii) einen Ereigniscode
beinhalten;
e) wobei die Telefonvorrichtung eine Einrichtung umfaßt, die auf die Eingabe der Identifizierungscodes reagiert, um die Verbindung herzustellen und die Codes zu übertragen; und
f) wobei der Nachrichtenempfangsapparat dazu ausgelegt ist, in seinem Speicher den Codes entsprechende Daten zu speichern.

2. Überwachungssystem für Dienstleister nach Anspruch 1, dadurch gekennzeichnet, daß
g) die Eingabeeinrichtung einen Ruhezustand, den sie während inaktiver Perioden einnimmt, und einen aktiven Zustand hat; und
h) das System weiter eine Auslöseeinrichtung (24), um die Eingabeeinrichtung zwischen dem Ruhezustand und dem aktiven Zustand zu schalten, aufweist.

3. Überwachungsvorrichtung für Dienstleister nach Anspruch 2, dadurch gekennzeichnet, daß
i) die Auslöseeinrichtung entfernt von der Telefonvorrichtung ist; und
j) das System eine entfernte Übertragungseinrichtung (6) zum Übertragen eines Signals zu der Eingabeeinrichtung aufweist, um die Telefonvorrichtung mit der Identität des Dienstleisters und/oder der erbrachten Dienstleistung zu versorgen und die Übertragung der Identifizierungscodes zu dem Nachrichtenempfangsapparat einzuleiten.

4. Überwachungsvorrichtung für Dienstleister nach Anspruch 2 und 3, dadurch gekennzeichnet, daß die Auslöseeinrichtung mit der Eingabeeinrichtung über elektrische Leiter verbunden ist.

5. Überwachungsvorrichtung für Dienstleister nach Anspruch 2, dadurch gekennzeichnet, daß
k) die Auslöseeinrichtung entfernt von der Telefonvorrichtung ist und die Aussendung eines für den Ort charakteristischen Signals veranlaßt; und
l) das System eine tragbare Einrichtung (25) umfaßt, die
eine Speichereinrichtung (10) zum wenigstens zeitweiligen Speichern der Identifizierungscodes, und
eine Einrichtung (7) zum Ermöglichen der Speicherung der Daten in der Speichereinrichtung aufweist, wobei die Einrichtung zum Ermöglichen der Speicherung im Betrieb in Reaktion auf die Aktivierung der Auslöseeinrichtung betätigt wird.

6. Überwachungsvorrichtung für Dienstleister nach Anspruch 5, dadurch gekennzeichnet, daß die tragbare Einrichtung eine Datenübertragungseinrichtung (32, 33) enthält, die den Aufbau einer Verbindung zwischen der tragbaren Einrichtung und dem Nachrichtenempfangsapparat ermöglicht, damit die Daten über die Verbindung zu dem Apparat übertragen werden können.

7. Überwachungsvorrichtung für Dienstleister nach einem der Ansprüche 3 oder 6, dadurch gekennzeichnet, daß
m) das System einen Alarmauslöser (5) umfaßt, durch den die Übertragung eines Alarmsignals ausgelöst werden kann, wobei die Datenempfangseinrichtung in dem Nachrichtenempfangsapparat eine Einrichtung zum Empfangen von Daten, die von der Telefonvorrichtung in Reaktion auf ein Alarmsignal übertragen werden, aufweist.

8. Überwachungsvorrichtung für Dienstleister nach einem der Ansprüche 3 bis 7, dadurch gekennzeichnet, daß das System eine Einrichtung zur Berechnung einer Zeitperiode zwischen einer ersten Codeeingabe und einer zweiten Codeeingabe aufweist.

9. Überwachungssystem für Dienstleister nach Anspruch 8, dadurch gekennzeichnet, daß der Ereigniscode die Zeitdifferenz zwischen der Eingabe der ersten und zweiten Codeeingaben ist.

10. Verfahren zum entfernten Überwachen der Erbringung einer Dienstleistung durch einen Dienstleister, wobei das Verfahren gekennzeichnet ist durch:
a) die Verwendung eines Systems nach Anspruch 1, wobei die Telefonvorrichtung und die Eingabeeinrichtung an einem Ort angeordnet sind, an dem eine Dienstleistung erbracht werden soll, und wobei der Nachrichtenempfangsapparat davon entfernt ist;
b) die Schritte der Eingabe der Identifizierungscodes auf die Erbringung der Dienstleistung durch einen Dienstleister hin, wodurch die Telefonvorrichtung eine Verbindung mit dem Nachrichtenempfangsapparat herstellt und die Identifizierungscodes zu dem Nachrichtenempfangsapparat sendet, die
i) den Ort; und
ii) den Dienstleister und/oder die erbrachte Dienstleistung; und
iii) eine Ereigniszeit
identifizieren.

11. Verfahren nach Anspruch 10, dadurch gekennzeichnet, daß der Dienstleister die Identifizierungscodes zu Beginn und am Ende der erbrachten Dienstleistung eingibt.

12. Verfahren nach Anspruch 11, dadurch gekennzeichnet, daß die Telefonvorrichtung auf die Eingabe sowohl der ersten als auch der zweiten Eingabe hin die Identifizierungscodes zu dem Nachrichtenempfangsapparat überträgt und daß die Ereigniszeit in jedem Fall die aktuelle Zeit ist, die durch eine Zeitgebereinrichtung in der Telefonvorrichtung bereitgestellt wird, wobei der Nachrichtenempfangsapparat die zwischen der ersten und der zweiten Eingabe vergangene Zeitperiode berechnet.

13. Verfahren nach Anspruch 10, dadurch gekennzeichnet, daß die zwischen der ersten und der zweiten Eingabe vergangene Zeit durch eine Zeitgebereinrichtung in der Telefonvorrichtung gemessen wird und daß die Ereigniszeit bei der Übersendung der Identifizierungscodes durch die Telefonvorrichtung diese vergangene Zeit ist.

14. Verfahren nach einem der Ansprüche 10 bis 13, dadurch gekennzeichnet, daß es weiter die Schritte aufweist, daß der Dienstleister die Telefonvorrichtung aus einem Ruhezustand in einen aktiven Zustand durch Betätigen einer Auslöseeinrichtung schaltet, die außerhalb, aber benachbart zu dem Ort angeordnet ist, und die Identifizierungscodes durch Übertragung eines Signals von einer Übertragungseinrichtung zu der Telefonvorrichtung, die von dem Dienstleister getragen wird, eingibt.

## Revendications

1. Système de contrôle de prestataires de services, comprenant :
a) un appareil téléphonique (1), qui inclut une mémoire (10) et des moyens (8) pour composer un numéro mémorisé dans la mémoire ;
b) un dispositif d'entrée (14), au moyen duquel des codes d'identification peuvent être introduits dans l'appareil téléphonique ;
c) un dispositif (2) de réception de messages, auquel une liaison (4) partant de l'appareil téléphonique peut être établie en utilisant un numéro mémorisé dans la mémoire de l'appareil téléphonique, le dispositif de réception de messages comprenant des moyens (20) pour recevoir des données transmises à partir de l'appareil téléphonique, et une mémoire (22),
dans lequel
d) lesdits codes d'identification comprennent
i) une identité d'un prestataire de services et/ou d'un service délivré ; et
ii) une identité d'emplacement ; et
iii) un code d'événement ;
e) ledit appareil téléphonique comporte des moyens aptes à répondre à l'entrée desdits codes d'identification pour établir ladite liaison et transmettre lesdits codes ; et
f) ledit dispositif de réception de messages est adapté pour mémoriser, dans sa mémoire, les données correspondant auxdits codes.

2. Système de contrôle de prestataires de services selon la revendication 1, caractérisé en ce que :
g) le dispositif d'entrée possède un état inactif, qu'il prend pendant des périodes d'inactivité, et un état actif ; et
en ce que
h) le système comporte en outre un dispositif de déclenchement (24) pour commuter le dispositif d'entrée entre lesdits états inactif et actif.

3. Système de contrôle de prestataires de services selon la revendication 2, caractérisé en ce que
i) ledit dispositif de déclenchement est éloigné de l'appareil téléphonique ; et
en ce que
j) le système comprend un dispositif émetteur à distance (6) pour émettre un signal au dispositif d'entrée pour envoyer à l'appareil téléphonique l'identité dudit prestataire de services et/ou du service délivré et déclencher l'émission desdits codes d'identification en direction dudit dispositif de réception de message.

4. Système de contrôle de prestataires de services selon la revendication 2 ou 3, caractérisé en ce que le dispositif de déclenchement est connecté au dispositif d'entrée au moyen de conducteurs électriques.

5. Système de contrôle de prestataires de services selon la revendication 2, caractérisé en ce que
k) ledit dispositif de déclenchement est distant de l'appareil téléphonique et déclenche l'émission d'un signal unique pour ledit emplacement ; et
en ce que
l) le système comprend un dispositif portable (25) comprenant :
des moyens de mémoire (10) pour mémoriser au moins temporairement lesdits codes d'identification ; et
des moyens (7) pour valider les données devant être mémorisées dans lesdits moyens de mémoire, lesdits moyens de validation des données devant être mémorisées étant actionnés, en cours d'utilisation, en réponse à une activation dudit dispositif de déclenchement.

6. Système de contrôle de prestataires de services selon la revendication 5, caractérisé en ce que ledit dispositif portable comprend des moyens de transmission de données (32, 33) pour valider une liaison devant être établie entre le dispositif et ledit dispositif de réception de messages de manière que lesdites données puissent être envoyées audit dispositif de réception de messages par l'intermédiaire de ladite liaison.

7. Système de contrôle de prestataires de services selon l'une quelconque des revendications 3 ou 6, caractérisé en ce que
m) le système contient un déclencheur d'alarme (5), au moyen duquel l'émission d'un signal d'alarme peut être déclenché, les moyens de réception de données situés dans le dispositif de réception de message comprenant des moyens pour recevoir des données émises dans l'appareil téléphonique en réponse à un signal d'alarme.

8. Système de contrôle de prestataires de services selon l'une quelconque des revendications 3 à 7, caractérisé en ce que le système comprend des moyens pour calculer un intervalle de temps entre une première entrée de code et une seconde entrée de code.

9. Système de contrôle de prestataires de services selon la revendication 8, caractérisé en ce que ledit code d'événement est l'intervalle de temps entre les arrivées desdites première et seconde entrées de codes.

10. Procédé de contrôle à distance de la délivrance d'un service par un prestataire de services, le procédé étant caractérisé en ce qu'il comprend :
a) l'utilisation d'un système tel que revendiqué dans la revendication 1, dans lequel l'appareil téléphonique et le dispositif d'entrée sont situés en un emplacement où ledit service doit être délivré et dont ledit dispositif de réception de message est distant ;
b) les étapes d'entrée desdits codes d'identification lors de la délivrance dudit service par un prestataire de services, ce qui a pour effet que ledit appareil téléphonique établit une liaison avec ledit dispositif de réception de messages et transmet lesdits codes d'identification identifiant le dispositif de réception de messages :
i) l'emplacement ; et
ii) le prestataire de services et/ou le service délivré ni ; et
iii) un instant d'événement.

11. Procédé selon la revendication 10, caractérisé en ce que le prestataire de service introduit lesdits codes d'identification au début et à la fin du service délivré.

12. Procédé selon la revendication 11, caractérisé en ce que ledit appareil téléphonique envoie lesdits codes d'identification au dispositif de réception de message lors de l'introduction desdites première et seconde entrées et ledit instant d'événement, et dans tous les cas l'instant actuel, fourni par des moyens formant horloge dans l'appareil téléphonique, ledit dispositif de réception de messages calculant un intervalle de temps écoulé entre lesdites première et seconde entrées.

13. Procédé selon la revendication 10, caractérisé en ce que le temps écoulé entre lesdites première et seconde entrées est mesuré par les moyens formant horloge situés dans l'appareil téléphonique, et ledit instant d'événement lors de l'émission desdits codes d'identification par l'appareil téléphonique est ledit temps écoulé.

14. Procédé selon l'une quelconque des revendications 10 à 13, caractérisé en ce qu'il comporte en outre les étapes de commutation, par ledit prestataire de services, dudit appareil téléphonique d'un état inactif à un état actif par actionnement d'un dispositif de déclenchement disposé extérieurement, mais au voisinage dudit emplacement, et l'introduction desdits codes d'identification au moyen de la transmission d'un signal par un dispositif d'émission à l'appareil téléphonique porté par ledit prestataire de services.
